# EUROPEAN PATENT SPECIFICATION

(11) **EP 1 268 163 B1**
(45) Date of publication and mention of the grant of the patent: **03.09.2003**
(21) Application number: 01907527.4
(22) Date of filing: 13.02.2001
(51) Int. Cl.: B29C 49/78, B29C 49/80

(54) **BLOW-MOULDING PLANT WITH APPARATUS FOR AUTOMATIC BURST DETECTION IN BLOW-MOULDED CONTAINERS**
BLASFORMANLAGE MIT EINRICHTUNG ZUM AUTOMATISCHEN ERKENNEN VON GEPLATZTEN BLASFORMBEHÄLTERN
UNITE DE MOULAGE PAR SOUFFLAGE AVEC APPAREIL DE DETECTION AUTOMATIQUE D'ECLATEMENT DANS DES CONTENANTS MOULES PAR SOUFFLAGE

(30) Priority: 01.03.2000 IT PN000015
(43) Date of publication of application: 02.01.2003
(73) Proprietor: SIPA S.p.A., I-31029 Vittorio Veneto (IT)
(72) Inventor: GIROTTO, Luigi, I-31027 Spresiano (IT); ZOPPAS, Matteo, I-33074 Fontanafredda (IT)
(74) Representative: Giugni, Valter
(86) International application number: EP0101571
(87) International publication number: WO01064425

(56) References cited:
- EP-A- 0 768 165
- DE-A- 3 245 605
- PATENT ABSTRACTS OF JAPAN vol. 1995, no. 06, 31 July 1995 (1995-07-31) & JP 07 080899 A (KOBE STEEL LTD), 28 March 1995 (1995-03-28)

## Description

The present invention refers to a plant for the production of hollow plastic articles, or plastic containers, in particular bottles, which is provided with special apparatuses dedicated to identifying bottles that have possibly been blow moulded in a faulty manner and must therefore be rejected.

Although reference will be made in the following description, mainly for reasons of greater descriptive convenience, to a plant for blow moulding bottles of plastic material, it will be appreciated that the present invention shall be understood as applying also to other kinds of plants and processes, as far as these fall within the scope of the appended claims.

Largely known in the art are plants and processes for blow moulding plastic bottles that are obtained by filling with gas under pressure appropriately heated plastic semi-processed elements which are generally known by their technical name of "parisons" or "preforms" in the art.

Plants of such a kind are for instance described in the published European patent application EP-A-768165 of this same Applicant, as well as in the various patent publications cited therein.

In these plants, the bottle production process, and therefore the preform blow-moulding process, comprises, further to the auxiliary product handling phases, also a main step, ie. the actual blow moulding step, which consists of a very quick filling of the preform with compressed gas in such a manner as to cause the same preform, as appropriately heated up in advance, to expand through the dilatation of the walls thereof, until it actually takes the shape of the final-container die or mould inside which the preform had been inserted in advance of the admission of the compressed gas and the resulting expansion.

Usually, if the production process is appropriately adjusted in all of the basic parameters thereof, and is kept constantly under control, no particular drawback or trouble arises and the bottle production process, on an industrial scale involving a production capacity of up to many thousands bottles per hour, is capable of going on undisturbed.

The possibility however is given that, owing to a number of most varied reasons, which on the other hand shall not be discussed here owing to them not having any relevance to the present invention, some production irregularities or disturbances may occur to such an extent as to cause some preforms, in a random sequence thereof, to expand in an incorrect manner, although blow moulded regularly, up to the point that they may even burst either before reaching their final shape or immediately thereafter, while they still dwell inside the blow-moulding die.

When such an event occurs, the blow-moulding plant goes on operating, but the bottles that have so burst and, therefore, failed to be completed correctly continue to be transported, although in their form of fully useless rejects, on to the next conveyance line together with the correctly produced bottles and, again together with said correctly produced bottles, they are eventually collected in appropriate storage bins or similar containers before being sent to final utilization.

As far as this particular step is concerned, the need therefore arises for either manual or mechanical and partly automated means to be provided to identify possible faulty bottles and remove them from the conveying, collecting and storage means as described above.

Such an operation does of course not fail to generate corresponding production costs and charges which are quite frequently fully unacceptable in an industrial environment that is subject to a high extent of pressure in terms of manufacturing competition. It anyway introduces a complication in the manufacturing process, since it necessarily implies an addition of auxiliary operations that must be carried out by appropriate operators, usually on an off-line basis.

It therefore is desirable, and it is actually a main purpose of the present invention, to provide a plant and a respective process that are capable of performing an automatic preform blow-moulding process and, at the same time, are capable of identifying in a substantially immediate manner those dies in which a preform is possibly blown to bursting, and keeping track of any so identified reject so as to be able to put apart, in a fully automatic manner at an appropriate station through which said faulty preforms are due to pass, all such faulty bottles.

Such a plant and related process shall furthermore be reliable, fully efficient and operatively effective, as well as capable of being implemented through the use of readily available techniques and materials.

According to the present invention, these and further aims are reached in a plant and a process featuring the characteristics as recited in the appended claims.

The present invention may be implemented in the form of a preferred embodiment that is described and illustrated in detail below by way of non-limiting example with reference to the single accompanying drawing.

The present invention is essentially based on the observation that when, during the blow moulding of a preform, the latter undergoes tearing or breakage, one of the most immediate consequences of such an occurrence is a clearly perceptible explosion that is due to the fact that the compressed air inside the bottle being so moulded escapes abruptly and violently through the leak so formed in the wall of said bottle and propagates outside by emitting an bursting noise that is characteristic of such an occurrence.

The possibility is therefore given for appropriate means to be provided to detect such a bursting noise and, based on this, logically infer that the given preform blow-moulding process has failed to be completed in a correct manner, so that a reject has been actually produced instead of the desired bottle, wherein said reject must be eliminated from the production line.

While going on investigating the whole set of occurrences and circumstances connected with this phenomenon, it has furthermore been found that the die originating the noise of a preform bursting in a blow-moulding die is clearly identifiable from the noise that the same die issues, even in the case that such a die is arranged to form a battery with or in the same structure shared with other blow-moulding dies working in parallel therewith through a same cycle.

On the basis of these observations, findings, experiments and considerations, a contrivance has therefore been devised according to which, if appropriate acoustic sensors are arranged in suitable positions outside the individual dies or the structure containing the blow-moulding dies, and if the signal generated by such sensors is appropriately processed and compared, the possibility is given to find out whether a production reject has been produced during the blow moulding step of the preforms, as well as at which moment and in which die such a reject has been actually produced.

It becomes therefore quite simple for anyone skilled in the art to keep track of the subsequent path followed by such a faulty product and appropriately remove it, in a preferably automatic manner at an appropriate station along the line, from the subsequent processing, conveying phases through which the blow-moulded bottles are due to pass.

According to the present invention, a plant capable of detecting possible bursts of plastic bottles in the die during blow moulding of the related preforms essentially comprises:
- a blow-moulding die 1,
- an acoustic signal sensor 2 adapted to detect the acoustic signals coming from said blow-moulding die and convert them into an appropriate electric signal,
- means for processing said electric signal so as to make it comparable with one or more pre-selectable reference signals.

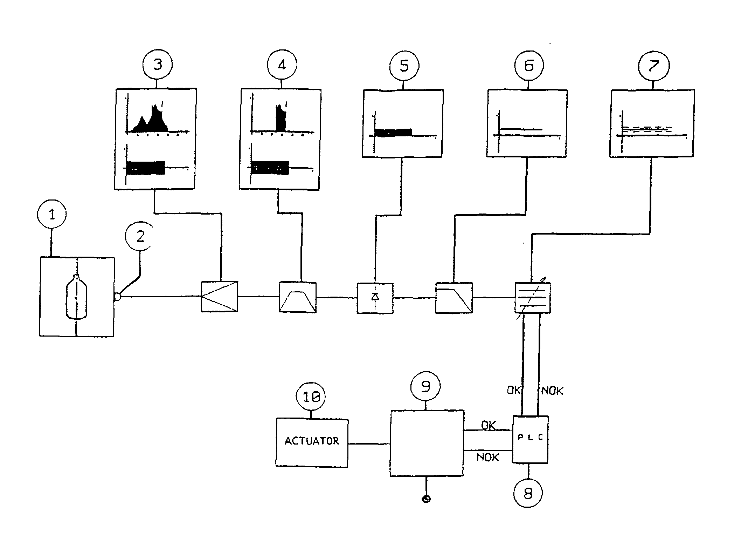

With reference to the accompanying Figure, such means preferably comprise:
- an amplifier 3 in order to obtain an adequate signal level,
- a band-pass filter 4 adapted to select the most significant frequency band representing the concerned phenomenon,
- a rectifier device 5 and a filter device 6 to rectify and filter, respectively, the so obtained signal to the purpose of producing a corresponding DC signal,
- a comparator device 7, in which the so just processed and produced signal is capable of being compared with at least a selectively pre-settable signal and, in accordance with the outcome of such a comparison, a specific control signal is generated to be sent to
- a PLC 8 capable of processing out an appropriate control signal that is sent to a power control unit 9, whose output signal is then transmitted to a suitable actuator 10 which is so capable of completing the operation to reject the so produced and identified faulty bottle from the production line.

As far as said comparator device 7 is concerned, the same is capable of being arranged so as to store a reference signal, as well as being pre-set in such a manner that, if the signal obtained at the output of the signal filtering device 6 is at a higher level than said reference signal, the control signal is duly activated to effectively remove the faulty bottle from the production line.

It shall of course be appreciated that said reference signal will be pre-set to a level, as duly determined on the basis of experimental and other kinds of data, to which an acceptable and measured confidence corresponds that, if the produced signal exceeds such a pre-set level, the corresponding bottle is faulty, without this of course necessarily excluding the opposite case.

As far as the most appropriate position or positions are concerned, at which each sensor is to be placed with respect to the related blow-moulding die, it may be synthetically noticed here that blow-moulding dies can essentially be subdivided into two main categories, in which the first category comprises plants in which the blow-moulding dies are individual units, in the sense that each die or mould encloses a single blow-moulding cavity and is physically distinct and separated from any other die.

For such a kind of individual dies it is only natural and obvious that the related sensor has to be arranged in a position outside the structure of the same individual die, since such a position is not particularly critical owing to the fact that the bursting noise detected by the sensor will of course only and unequivocally refer to the preform being blow moulded in the respective blow-moulding cavity.

As far as those blow-moulding dies are on the contrary concerned, which are arranged within or are anyway rigidly associated to either a single common platen or frame or two mutually opposing platens in which there are provided a multiplicity of blow-moulding cavities, the position in which the sensors are to be placed shall be identified using a much greater extent of accuracy in view of preventing the sensors from possibly responding too sensitively to bursting noises that are not generated in the cavity to which they are associated, but rather in an adjacent cavity.

Anyway, an accurate experimental investigation of the transmission of the acoustic phenomena through the walls of the dies, a possible multiplication of the sensors intended to detect and map the acoustic phenomena relating to a single cavity so as to be able to more easily and reliably discriminate the acoustic phenomena coming from contiguous cavities, as well as an appropriate processing, filtering of a plurality of received signals and a comparison of these signals both with each other and a selected reference signal, so as this may be easily implemented by anyone skilled in the art on the basis of an experimental programme, will enable the most suitable embodiment of the present invention to be easily and unequivocally be identified each time in connection with each and any given typology or aggregation form of the blow-moulding dies.

In this connection, a particularly advantageous solution answering this purpose may also be found by arranging said acoustic sensors not on the outside of the structure of the respective die, but rather inside it, in a position that is much closer to the surface of the inner blow-moulding cavity.

## Claims

1. Blow moulding plant for the production of hollow bodies of plastic material, obtained from respective preforms, comprising:
- a plurality of dies (1) for blow moulding the preforms into said hollow bodies,
- means for transferring said hollow bodies, upon their having being so produced by blow moulding, to a subsequent processing or storage station **characterized in that** it further comprises:
- at least an acoustic/electric transducer device (2) adapted to detect the sound emitted outwardly individually by said dies during the blow moulding phase, and to convert it into an electric signal,
- means adapted to process said electric signal and convert it into a signal capable of being compared with at least a reference signal or level,
- means adapted to perform such a comparison of said processed electric signal with said reference signal or level, and to generate an appropriate signal that univocally identifies the outcome of said comparison.

2. Blow moulding plant according to claim 1, **characterized in that** it further comprises actuator means (10) adapted to exclude said hollow bodies from said transferring means in accordance with said respective univocally indicative signal.

3. Blow moulding plant according to claim 1, **characterized in that** it further comprises any of the following devices:
- an amplifier (3),
- a band-pass filter (4) adapted to select the most significant frequency band representing an acoustic phenomenon,
- a rectifier device (5) and a filter device (6) to rectify and filter, respectively, the so obtained signal,
- a comparator device (7), in which the so obtained signal is capable of being compared with at least a selectively pre-settable signal, and adapted to generate a specific control signal,
- a PLC (8) capable of processing out an appropriate control signal that is sent to a power control unit (9),
- an appropriate actuator (10) which is capable of excluding the so selectively identified hollow bodies from the production line.

4. Blow moulding plant according to any of the preceding claims, **characterized in that** said acoustic/electric transducer apparatuses are at least partially housed inside the platen or frame that is common to several dies, and are arranged in the vicinity of respective blow-moulding cavities.

## Patentansprüche

1. Blasformanlage für die Herstellung von Hohlkörpern aus Kunststoffmaterial, die aus entsprechenden Vorformlingen gewonnen werden, die umfasst:
eine Vielzahl von Werkzeugen (1) zum Blasformen der Vorformlinge zu den Hohlkörpern,
eine Einrichtung zum Überführen der Hohlkörper, nachdem sie so durch Blasformen hergestellt worden sind, zu einer anschließenden Bearbeitungs- oder Aufbewahrungsstation, **dadurch gekennzeichnet, dass** sie des Weiteren umfasst:
wenigstens eine Schall/Elektro-Wandler-Vorrichtung (2), die so eingerichtet ist, dass sie den von den Werkzeugen während der Blasformphase einzeln nach außen emittierten Schall erfasst und ihn in ein elektrisches Signal umwandelt,
eine Einrichtung, die so eingerichtet ist, dass sie das elektrische Signal verarbeitet und es in ein Signal umwandelt, das mit wenigstens einem Bezugssignal oder - pegel verglichen werden kann,
eine Einrichtung, die so eingerichtet ist, dass sie einen derartigen Vergleich des verarbeiteten elektrischen Signals mit dem Bezugssignal oder -pegel durchführt und ein geeignetes Signal erzeugt, das das Ergebnis des Vergleiches eindeutig angibt.

2. Blasformanlage nach Anspruch 1, **dadurch gekennzeichnet, dass** sie des Weiteren eine Betätigungseinrichtung (10) umfasst, die so eingerichtet ist, dass sie die Hohlkörper gemäß dem entsprechenden eindeutig anzeigenden Signal aus der Überführungseinrichtung aussondert.

3. Blasformanlage nach Anspruch 1, **dadurch gekennzeichnet, dass** sie des Weiteren die folgenden Vorrichtungen umfasst:
einen Verstärker (3),
ein Bandpassfilter (4), das so eingerichtet ist, dass es das höchstwertige Frequenzband auswählt, das eine akustische Erscheinung darstellt,
eine Gleichrichtvorrichtung (5) und eine Filtervorrichtung (6) zum Gleichrichten bzw. Filtern des so gewonnenen Signals,
eine Vergleichseinrichtung (7), in der das so gewonnene Signal mit wenigstens einem wahlweise voreinstellbaren Signal verglichen werden kann, und die so eingerichtet ist, dass sie ein spezielles Steuersignal erzeugt,
eine programmierbare Steuerung (8), die in der Lage ist, ein geeignetes Steuersignal auszugeben, das zu einer Leistungsreglereinheit (9) gesendet wird,
ein geeignetes Betätigungselement (10), das in der Lage ist, die so wahlweise identifizierten Hohlkörper aus der Herstellungslinie auszusondern.

4. Blasformanlage nach einem der vorangehenden Ansprüche, **dadurch gekennzeichnet, dass** die Schall-/Elektro-Wandler-Vorrichtungen wenigstens teilweise innerhalb der Platte bzw. des Rahmens aufgenommen sind, den mehrere Werkzeuge gemeinsam haben, und in der Nähe entsprechender Blasformhohlräume angeordnet sind.

## Revendications

1. Unité de moulage par soufflage pour la production de corps creux en matériau plastique, obtenus à partir de préformes respectives, comprenant :
- une pluralité de moules (1) pour le moulage par soufflage des préformes en lesdits corps creux,
- des moyens pour transférer lesdits corps creux, une fois qu'ils ont été ainsi produits par moulage par soufflage, vers une station suivante de traitement ou de stockage, **caractérisée en ce qu'**elle comprend en outre :
- au moins un dispositif transducteur acoustique/électrique (2) adapté pour détecter le son émis individuellement vers l'extérieur par lesdits moules pendant la phase de moulage par soufflage, et pour le convertir en un signal électrique,
- des moyens adaptés pour traiter ledit signal électrique et le convertir en un signal pouvant être comparé avec au moine un signal ou niveau de référence,
- des moyens adaptés pour réaliser une telle comparaison dudit signal électrique traité avec ledit signal ou niveau de référence et pour générer un signal approprié qui identifie de façon univoque le résultat de ladite comparaison.

2. Unité de moulage par soufflage selon la revendication 1, **caractérisée en ce qu'**elle comprend en outre des moyens d'actionnement (10) adaptés pour exclure lesdits corps creux desdits moyens de transfert conformément audit signal indicatif univoque respectif.

3. Unité de moulage selon la revendication 1, **caractérisée en ce qu'**elle comprend en outre l'un quelconque des dispositifs suivants :
- un amplificateur (3),
- un filtre passe-bande (4) adapté pour sélectionner la bande de fréquence la plus significative représentant un phénomène acoustique,
- un dispositif redresseur (5) et un dispositif filtrant (6) pour respectivement redresser et filtrer le signal ainsi obtenu,
- un dispositif comparateur (7), dans lequel le signal ainsi obtenu peut être comparé avec au moins un signal sélectivement pré-réglable, et adapté pour produire un signal de commande spécifique,
- un automate programmable (8) pouvant traiter un signal de commande approprié qui est envoyé vers une unité de commande de puissance (9),
- un actionneur approprié (10) qui est capable d'exclure de la ligne de production les corps creux ainsi sélectivement identifiés.

4. Unité de moulage par soufflage selon l'une quelconque des revendications précédentes, **caractérisée en ce que** lesdits appareils transducteurs acoustiques/électriques sont logés, au moins partiellement, à l'intérieur du plateau ou du châssis qui est commun à plusieurs moules et sont agencés à proximité de cavités respectives de moulage par soufflage.
